# EUROPEAN PATENT APPLICATION

(11) **EP 4 752 506 A1**
(43) Date of publication of application: **03.06.2026**
(21) Application number: 24845084.3
(22) Date of filing: 26.02.2024
(51) Int. Cl.: G01D 5/353

(54) **DETECTION SENSOR AND MONITORING**

(30) Priority: 26.07.2023 JP 2023121513
(71) Applicant: Mitsubishi Heavy Industries, Ltd., Tokyo 100-8332 (JP)
(72) Inventor: ISHIOKA, Masahito, Tokyo 100-8332 (JP); FUJITA, Takeshi, Tokyo 100-8332 (JP); SHINDO, Kentaro, Tokyo 100-8332 (JP)
(74) Representative: Studio Torta S.p.A.
(86) International application number: PCT/JP2024/006745
(87) International publication number: WO 2025/022699

(57) **Abstract**

The present invention reduces the burden of installing a detection sensor for monitoring a liquid such as a liquid resin. A detection sensor according to the present invention comprises: an optical transmission body group that includes a plurality of optical transmission bodies which each transmit light supplied from a light source; and a thin band-shaped holder that supports the optical transmission body group. The holder is provided with a first holder element that supports one or more optical transmission body groups, on a support surface that expands in a first direction and in a second direction orthogonal to the first direction. The plurality of optical transmission bodies are arranged in the second direction.

## Description

### Technical Field

The present disclosure relates to a sensor that detects a liquid, and more particularly, to a liquid detection sensor that can ascertain an impregnation state during an impregnation operation in which a fibrous base material is impregnated with a liquid resin under vacuum.

### Background Art

A fiber-reinforced plastic (FRP), which is a lightweight and high-strength material, uses glass fibers or carbon fibers as reinforcing fibers and is widely used, as a composite material, for aircraft main wings, ships, rotor blades of large wind turbines, railway vehicles, structural members in the construction field, and the like.

As one molding method for a member made of a composite material, there is a molding method of impregnating, with a liquid resin prior to curing, a reinforcing fiber base material disposed in a molding tool, and curing the resin after impregnation to produce a molded article having a predetermined shape. This molding method is called resin transfer molding (RTM). Since FRP members of products to which the aforementioned composite material is applied are required to have a predetermined strength, in RTM, it is essential to reliably impregnate the reinforcing fiber base material with the resin and to prevent the occurrence of unimpregnated defects that cause a reduction in strength. Therefore, at production sites where FRP members are industrially produced by RTM, it is necessary, in order to ensure the strength of the FRP members, to detect and monitor whether the resin has fully impregnated the entirety of the reinforcing fibers.

With respect to resin monitoring, PTL 1 discloses a liquid detection sensor that is easy to manufacture and exhibits little variation in optical response characteristics. In PTL 1, a first optical path that transmits light from a light source; a curved portion (light-scattering portion) at which light transmitted through the first optical path is scattered to an outside; and a second optical path that transmits light having entered from the curved portion to a predetermined position are provided. In the detection sensor of PTL 1, the first optical path, the curved portion, and the second optical path are made of a light-transmissive material, and an intensity of light scattered to the outside at the curved portion is greater than an intensity of light scattered to the outside in the first optical path or an intensity of light scattered to the outside in the second optical path.

### Citation List

### Patent Literature

[PTL 1] Japanese Unexamined Patent Application Publication No. 2007-218653

### Summary of Invention

### Technical Problem

An object of the present disclosure is to reduce a burden of installing a detection sensor for monitoring a liquid such as a liquid resin.

### Solution to Problem

According to the present disclosure, there is provided a detection sensor including:
an array of optical transmission members that include a plurality of optical transmission members each of which transmits light supplied from a light source; and
a thin strip-shaped holder that supports the array of optical transmission members,
in which the holder includes
   a first holder element (21) that supports one or more arrays of optical transmission members on a support surface spanning a first direction (longitudinal direction L) and a second direction (width direction W) orthogonal to the first direction, and
the plurality of optical transmission members are arranged in the second direction.

According to the present disclosure, there is provided a monitoring system including:
a resin impregnation portion (80) in which reinforcing fibers (RF) disposed inside a mold are impregnated with a liquid resin;
a detection unit (90A, 90B) that detects an impregnating resin in the resin impregnation portion (80); and
a control unit (70) that controls a monitoring operation of the impregnating resin.

The detection unit (90A, 90B) includes any one of the detection sensors (1) according to the present disclosure.

According to the present disclosure, there is provided an impregnating resin monitoring method of detecting that reinforcing fibers (RF) disposed inside a mold are impregnated with a liquid resin, the monitoring method including:
installing any one of the detection sensors (1) according to the present disclosure inside the mold so as to be adjacent to the reinforcing fibers (RF).

### Advantageous Effects of Invention

With the detection sensor according to the present disclosure, the first holder element supports one or more arrays of optical transmission members on the support surface spanning the first direction and the second direction orthogonal to the first direction. Therefore, in a case where the first holder element is installed only once, it is possible to provide a plurality of detection surfaces, so that, according to the present disclosure, a burden of installation can be reduced.

### Brief Description of Drawings

FIG. 1 is a plan view showing a liquid detection sensor according to an embodiment.
FIG. 2A is a cross-sectional view taken along line IIA-IIA of FIG. 1, and FIG. 2B is a cross-sectional view taken along line IIB-IIB of FIG. 1.
FIG. 3 is a diagram showing a modification example of the detection sensor according to the embodiment of the present disclosure.
FIG. 4 is a diagram showing another modification example of the detection sensor according to the embodiment of the present disclosure.
FIG. 5 is a diagram showing a detection principle of a resin as a liquid by the detection sensor according to the embodiment of the present disclosure.
FIG. 6 is a graph showing a relationship between a refractive index and a Fresnel reflectance of a detection target.
FIG. 7 is a diagram showing still another modification example of the detection sensor according to the embodiment of the present disclosure.
FIG. 8 is a diagram showing still another modification example of the detection sensor according to the embodiment of the present disclosure.
FIG. 9 is a diagram showing an outline of an RTM process.
FIG. 10 is a diagram showing a state of resin impregnation by three types of detection sensors.
FIG. 11 is a diagram showing a state of resin impregnation by a detection sensor 1A.
FIG. 12 is a diagram showing a state of resin impregnation by a detection sensor 1F.
FIG. 13 is a diagram illustrating differences in resin impregnation due to differences in a form of a peripheral edge of the detection sensor.
FIG. 14 is a diagram showing an example of a monitoring system according to the embodiment.
FIG. 15 is a diagram showing another example of the monitoring system according to the embodiment.
FIG. 16 is a diagram showing an example of a structure of a mold (an upper mold) in the monitoring system according to the embodiment.
FIG. 17 is a diagram showing a relationship between the mold of FIG. 16 and a film.

### Description of Embodiments

Embodiments will be described below with reference to the accompanying drawings.

The description includes a detection sensor 1 (1A to 1F), and a system (60A, 60B) and a method for monitoring detection of a liquid resin as a liquid using the detection sensor 1 during an RTM process. Hereinafter, description will be given in order.

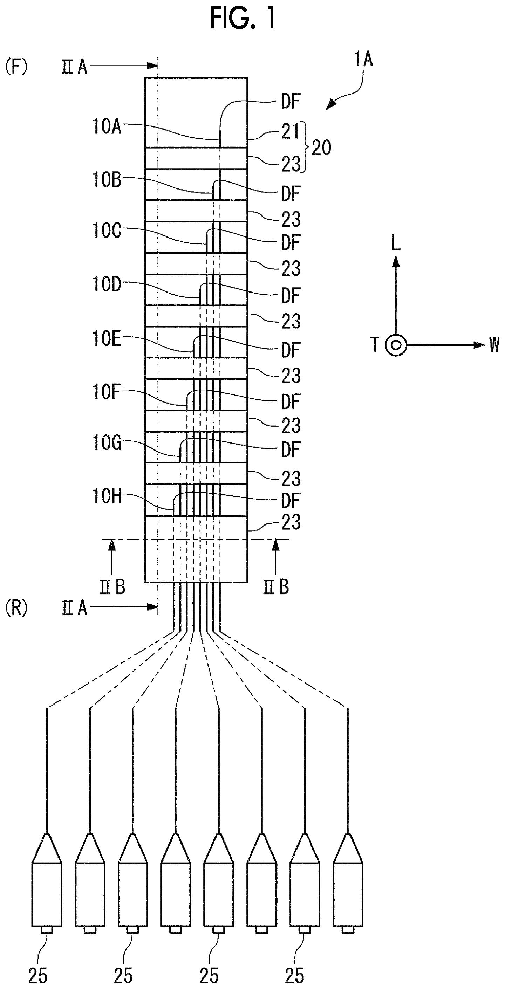

### [Detection Sensor 1A: Refer to FIGS. 1 to 8]

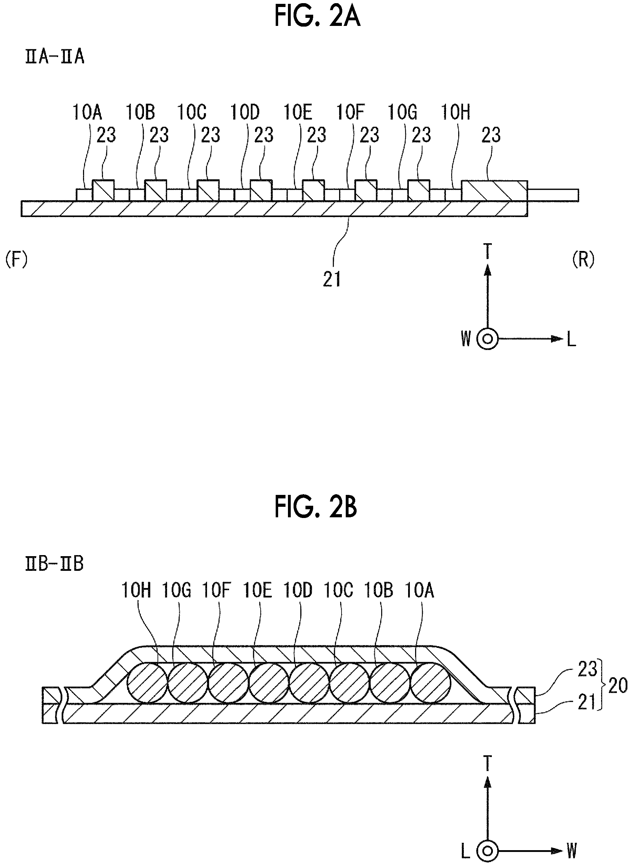

The detection sensor 1A includes a plurality of optical fibers 10 and a holder 20 that sandwiches and supports the plurality of optical fibers 10 from front and back sides. In the detection sensor 1A, since the plurality of optical fibers 10 are supported by the holder 20, by installing the holder 20 at a required location, the plurality of optical fibers 10 can be disposed in a single operation. The optical fiber 10 is an example of an optical transmission member according to the present disclosure. In addition, in the detection sensor 1A, as shown in FIGS. 1 to 2B, a longitudinal direction L, a width direction W, and a thickness direction T, as well as a front (F) and a rear (R), are defined.

### [Optical Fiber 10: FIGS. 1 to 2B]

The optical fiber 10 has a three-layer structure including a core, a cladding outside the core, and a coating that covers the cladding. By setting a refractive index of the core higher than that of the cladding, the structure is configured such that, via total reflection and refraction, light propagates as much as possible only in the central core.

In FIG. 1, as an example, eight optical fibers 10A, 10B, 10C, 10D, 10E, 10F, 10G, and 10H are supported by the holder 20 at intervals in the width direction W. Note that, when it is necessary to distinguish the eight optical fibers, the eight optical fibers are denoted as optical fibers 10A, 10B, 10C, 10D, 10E, 10F, 10G, and 10H, and when distinction is unnecessary, the eight optical fibers are denoted as an optical fiber 10. The plurality of optical fibers 10 are arranged at intervals in the width direction W. By arranging the optical fibers 10 at intervals in this way, it is possible to detect the liquid resin in accordance with the position of the impregnation front of the resin.

The optical fibers 10A, 10B, 10C, 10D, 10E, 10F, 10G, and 10H are supported by the holder 20 with mutually different lengths. That is, the optical fiber 10A is the longest, and the optical fibers 10B, 10C, 10D, 10E, 10F, 10G, and 10H become stepwise shorter in that order. Except for this length, the optical fibers 10A, 10B, 10C, 10D, 10E, 10F, 10G, and 10H have the same specifications and constitute an array of optical transmission members according to the present disclosure. Each of the optical fibers 10A, 10B, 10C, 10D, 10E, 10F, 10G, and 10H is provided with a connector 25 for connection to the monitoring system.

### [Holder 20: FIGS. 1 to 2B]

The holder 20 includes a first holder element 21 that supports the plurality of optical fibers 10 from one surface side, and a plurality of second holder elements 23 that support the plurality of optical fibers 10 from the other surface side. The first holder element 21 is formed of, for example, a resin sheet, has a thin strip shape, and spans the longitudinal direction L (first direction) and the width direction W (second direction) orthogonal to the longitudinal direction L. The one surface side thereof forms a support surface of the present disclosure. Note that, for achieving the object of the present disclosure, what is required is the first holder element 21, and the second holder element 23 is a preferred element in the present disclosure.

Each of the plurality of second holder elements 23 is formed of, for example, an adhesive tape made of a resin. The first holder element 21 has a larger surface area than the second holder element 23 and supports most of the plurality of optical fibers 10. The plurality of second holder elements 23 are attached to the first holder element 21 together with the plurality of optical fibers 10 at intervals in the longitudinal direction L. The second holder elements 23 are attached to the first holder element 21 at intervals, and an opening to the outside is provided in the first holder element 21 between the second holder elements 23 and the second holder elements 23 adjacent to each other. Then, an end face of the optical fiber 10 is disposed at the opening portion where the second holder element 23 is not attached.

The end face of the optical fiber 10 that is exposed to the outside serves as a detection surface DF for the resin that impregnates during the RTM process. The detection surfaces DF are cleaved faces, and the detection surfaces DF, which are formed of the cleaved faces of the plurality of optical fibers 10, are provided at positions offset in the longitudinal direction L.

The second holder element 23 is not limited to the above example, and can be provided in one or more regions of the first holder element 21 in the longitudinal direction L, over a part or all of the regions in the width direction W.

As described above, in the detection sensor 1A, the detection surfaces DF of the optical fibers 10 are disposed at a plurality of locations that are offset in position in the longitudinal direction L. Therefore, for example, it is possible to sequentially detect the progress of resin impregnation at a plurality of locations, such as detecting that the resin impregnation has reached the optical fiber 10A, and thereafter, it is detected that the resin impregnation has reached the optical fiber 10B, and further it is detected that the resin impregnation has reached the optical fiber 10C. Note that, here, an example has been described in which, in the order of arrangement in the width direction W from one side to the other, the detection surfaces DF are offset in position in the longitudinal direction L; however, the positional offset is not limited to this order.

Since detection of the resin can be performed when the liquid resin reaches the detection surface DF at a tip end of each of the optical fibers 10, portions other than the tip end are not necessarily required to be exposed to the outside.

In addition, in FIG. 1, in order to make the presence of the plurality of optical fibers 10 apparent, an example is shown in which gaps are provided in the width direction W between adjacent optical fibers 10 and 10; however, as shown in IIB-IIB of FIG. 2B, the adjacent optical fibers 10 may be in contact with each other without providing gaps in the width direction W. In a case where such gaps are present, the gaps can be closed.

Further, as will be described below, the second holder element 23 can also be attached along the longitudinal direction L to both sides of the first holder element 21 in the width direction W. Accordingly, the periphery of the detection surface DF of the optical fiber 10 is surrounded by the second holder element 23.

With the detection sensor 1A described above, the plurality of optical fibers 10 are supported by the first holder element 21 of the holder 20. Therefore, by installing the first holder element only once, a plurality of detection surfaces can be provided, so that, with the detection sensor 1A, the burden of installation can be reduced.

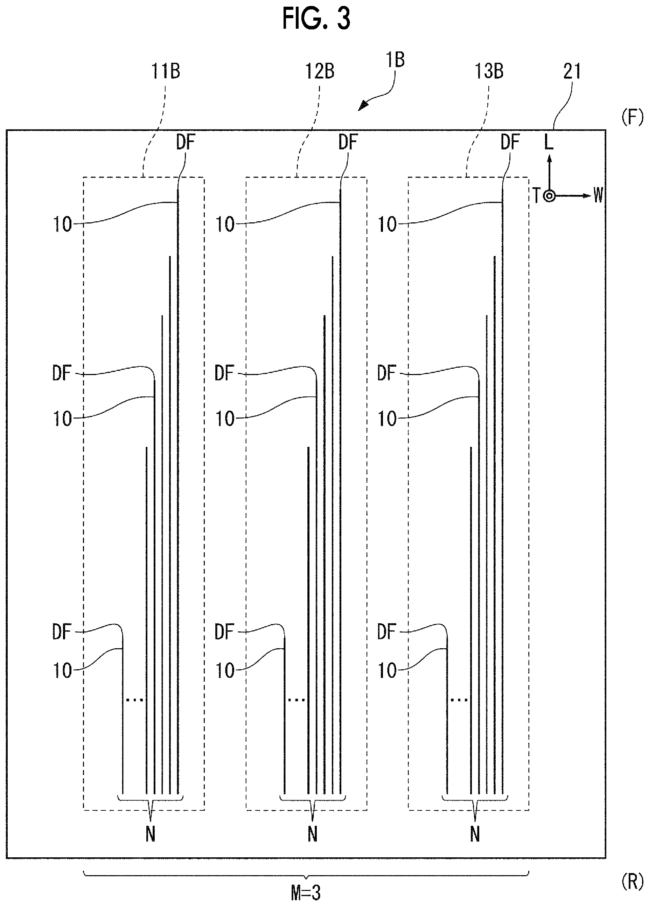

### [Detection Sensor 1B: Refer to FIG. 3]

An example has been described in which the detection sensor 1A includes a plurality of (N) detection surfaces DF provided in the longitudinal direction L. This is referred to as a one-dimensional array-type sensor; however, a two-dimensional array-type detection sensor 1B is provided in which, in addition to a plurality (N) of detection surfaces DF in the longitudinal direction L, a plurality (M) of detection surfaces DF are provided in the width direction W.

The detection sensor 1B includes three (M = 3) one-dimensional array-type sensor units 11B, 12B, and 13B. The sensor units 11B, 12B, and 13B each including N optical fibers 10 are disposed at intervals in the width direction W. Therefore, the detection sensor 1B constitutes a two-dimensional array-type sensor that is provided with detection points in a number represented by N × M. In FIG. 3, although descriptions such as the second holder elements 23 are omitted, it is possible to cover the first holder element 21 with the second holder elements 23 such that only the portions of the detection surfaces DF are exposed to the outside.

With the detection sensor 1B, a greater number of detection surfaces DF can be provided by a single installation operation.

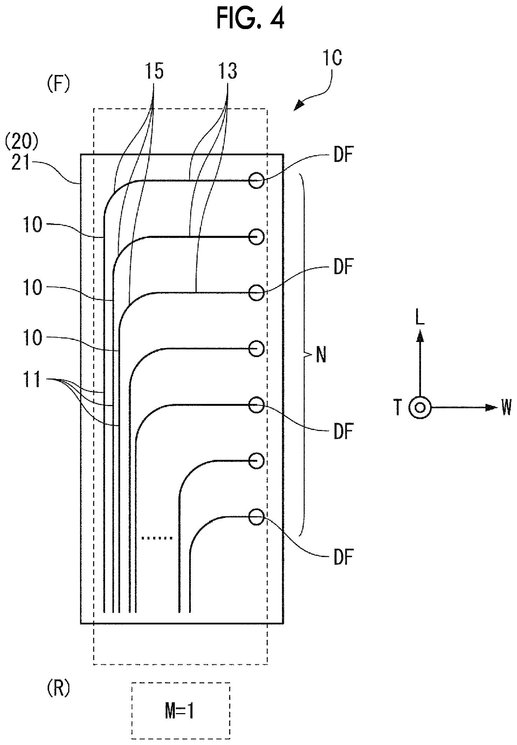

### [Detection Sensor 1C: FIG. 4]

The detection sensor 1A and the detection sensor 1B are examples in which the optical fiber 10 supported by the holder 20 extends straight in the longitudinal direction L; however, the present disclosure is not limited to this, and the optical fiber 10 may include a portion curved from the longitudinal direction L to the width direction W. This example is shown as the detection sensor 1C.

The detection sensor 1C includes N optical fibers 10, and includes a first portion 11 that extends in the longitudinal direction L and a second portion 13 that extends in the width direction W, and the first portion 11 and the second portion 13 are connected by an arcuate third portion 15. As an example, the detection surfaces DF of the N optical fibers 10 of the detection sensor 1C are provided at intervals in the longitudinal direction L at the same position in the width direction W.

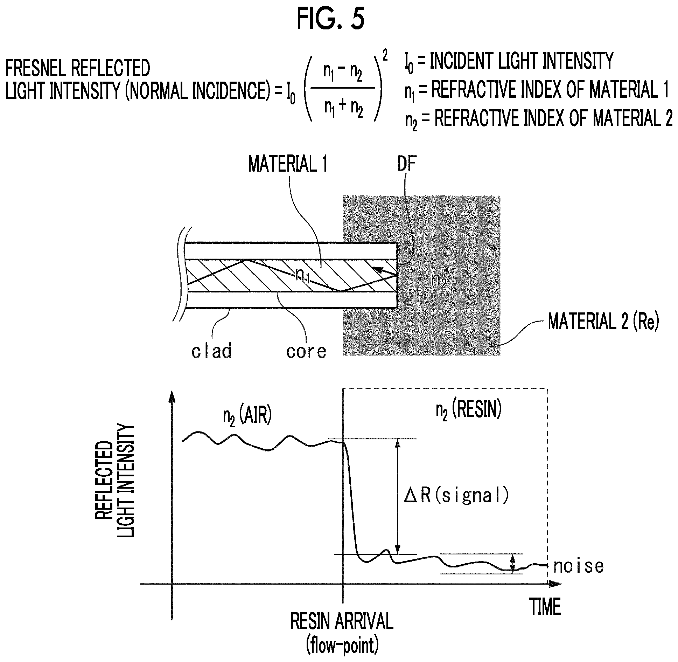

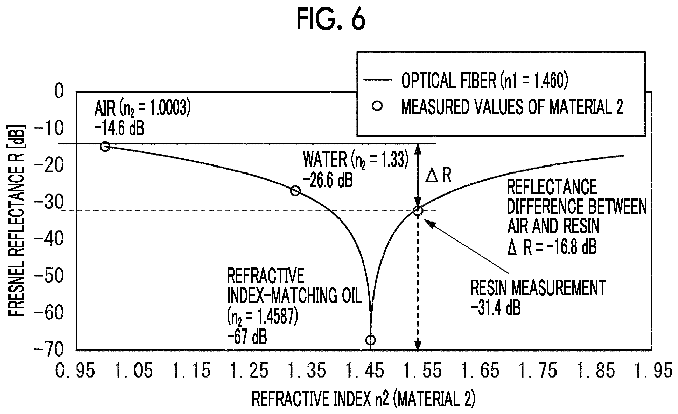

### [Measurement Principle and Detection Sensitivity: Refer to FIGS. 5 and 6]

Next, a detection principle and detection sensitivity of the liquid resin in the detection sensor 1 will be described.

This detection is based on Fresnel reflection. When light is incident on a boundary surface at which materials having different refractive indices are in contact, a part of the light is reflected, and this is called Fresnel reflection. The magnitude of reflection depends on a difference in refractive index and an angle of incidence; however, the Fresnel reflected light intensity is treated as near-normal incidence and can be obtained by the equation shown in FIG. 5. In the case of the detection sensor 1, a difference in the reflected light intensity occurs before and after a resin Re reaches the detection surface DF, which is the end face of the optical fiber 10. That is, as shown in the graph of FIG. 5, as compared with the reflected light intensity when air is in contact with the detection surface DF before the resin Re reaches the detection surface DF, the reflected light intensity after the resin Re has reached the detection surface DF decreases, and a difference ΔR occurs.

A relationship between the refractive index (n2) of a material 2 in contact with the detection surface DF of the optical fiber 10 and the Fresnel reflectance R is shown in FIG. 6. It has been confirmed that the Fresnel reflectance when the material 2 is air is -14.6 dB, the Fresnel reflectance when the material 2 is a specific resin is -31.4 dB, and the difference ΔR between air and the resin R is -16.8 dB. Since the detection sensitivity to the material 2 improves as ΔR increases, the core of the optical fiber 10 preferably has a refractive index approximating that of the resin Re as a detection target.

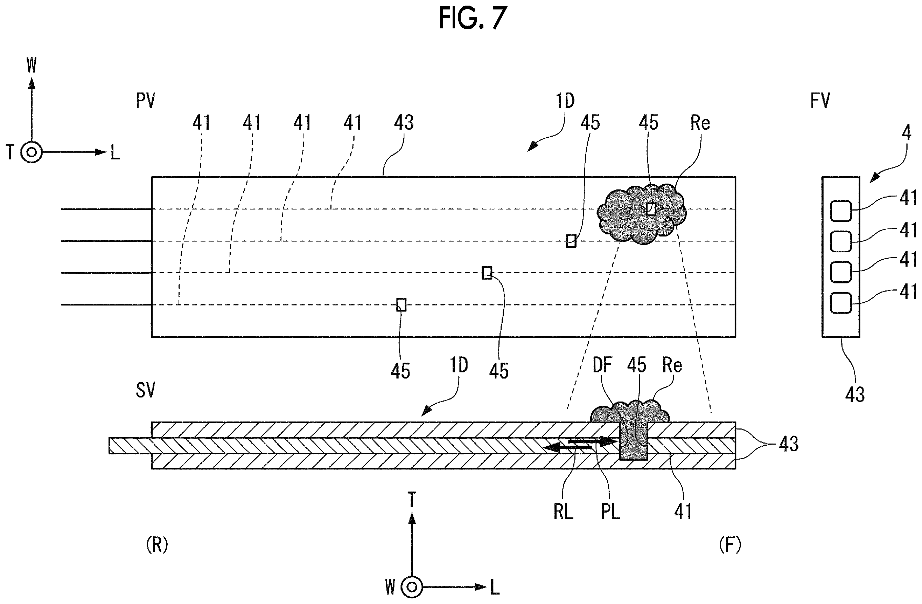

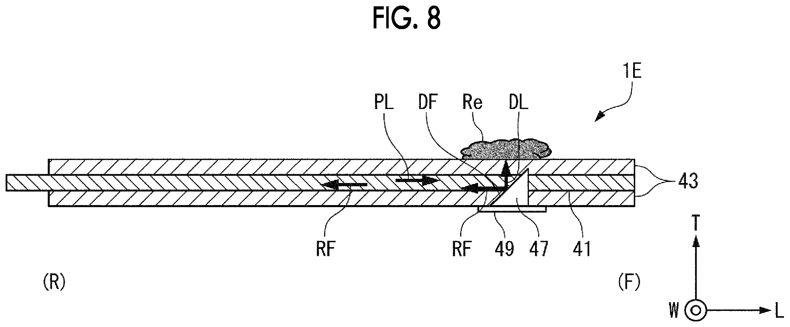

### [Detection Sensors 1D, 5: FIGS. 7 and 8]

Next, the detection sensors 1D and 1E will be described.

The detection sensors 1D and 1E use a thin strip-shaped optical waveguide structure. The optical waveguide structure refers to a structure that provides a path of light in which light propagates by total reflection, by sandwiching a material having a greater refractive index between materials having a smaller refractive index. An optical waveguide is a form of an optical transmission member; however, those having a thin strip-shaped or plate-shaped form are often referred to as an "optical waveguide structure".

The detection sensor 1D formed of an optical waveguide includes a plurality of cores 41 having a relatively greater refractive index and a cladding 43 having a relatively smaller refractive index that surrounds the cores 41. The plurality of cores 41 are spaced apart in the width direction W and extend in the longitudinal direction L. As is known to those skilled in the art, in an optical waveguide, the wiring pitch between the core 41 and the core 41 can be 60 µm or less, and in particular approximately 10 µm; therefore, as compared with the detection sensors 1A to 1C that use the optical fibers 10, optical wiring of greater density and a thinner sensor structure can be achieved. Although the detection sensor 1D shown is flat, since the materials constituting the cores 41 and the cladding 43 have flexibility, the detection sensor 1D readily bends when a load is applied.

The detection sensor 1D is provided with a resin introduction passage 45 such that the resin Re is taken into each of the plurality of cores 41 and the resin Re can reach the detection surface DF, which is an end face of the core 41. The resin introduction passage 45 is formed of a void that penetrates, in order, the cladding 43 and the core 41 from one (the front surface) of front and back surfaces of the detection sensor 1D. The resin introduction passages 45 are respectively provided for the plurality of cores 41 and are provided at positions offset in the longitudinal direction L. The resin introduction passage 45 has, in plan view, a rectangular opening shape and is parallel to the thickness direction T, that is, it is in perpendicular contact with the detection surface DF of the core 41. When the impregnating resin reaches a portion where the detection sensor 1D is disposed, the resin Re flows into the resin introduction passage 45 and comes into contact with the core 41. Then, probe light PL is reflected at the interface between the detection surface DF of the core 41 and the resin Re, and by detecting this reflected light RL, impregnation with the resin Re can be detected.

The detection sensor 1D shown in FIG. 7 is a one-dimensional array-type sensor; however, as with the detection sensor 1B, it can also be configured as a two-dimensional array-type sensor. Additionally, in the detection sensor 1D shown in FIG. 7, the cores 41 are straight in the longitudinal direction L; however, as in the detection sensor 1C, curved portions can also be provided. The same applies to the detection sensor 1E shown in FIG. 8.

The detection sensor 1E shown in FIG. 8 has the same basic configuration as the detection sensor 1D, except that the detection surface DF is inclined in the thickness direction T. As an example, the inclined detection surface DF is provided with a reflection chamber 47 formed of a triangular void in side view that penetrates from the cladding 43 on one side in the thickness direction T to the cladding 43 on the other side. The probe light PL that has propagated through the core 41 from the rear (R) toward the front (F) changes its direction by 90 degrees at the boundary between the detection surface DF and the reflection chamber 47 and then propagates. Assuming that the resin Re has reached directly above the reflection chamber 47, the probe light PL that has changed its direction and propagates is reflected by the resin Re, then propagates in the opposite direction, changes its direction by 90 degrees at the boundary between the detection surface DF and the reflection chamber 47, and is reflected toward the rear (R). The reflection chamber 47 is shielded from the outside by a shielding plate 49.

According to the detection sensors 1D and 1E, by providing an optical waveguide structure on a film or sheet and incorporating a plurality of detection surfaces DF therein, it is possible to implement a large number of detection surfaces DF by a single sheet installation operation, and, in addition, the dimension in the thickness direction T can be reduced as compared with the detection sensors 1A to 1C.

As a result, the effect of the surface shape of the detection sensor being imprinted onto the reinforcing fibers can be reduced.

Here, in the RTM process, the detection sensor is attached to the surface of the reinforcing fibers and heat-molded via the mold, and thereafter, the member that has been impregnated with the resin is removed from the mold. Then, the shape of the detection sensor is imprinted as irregularities on the surface of the reinforcing fibers. In order that the imprinted irregularities do not exceed quality tolerance values, the detection sensor is required to be as thin as possible; the detection sensors 1D and 1E are well suited to satisfy this requirement.

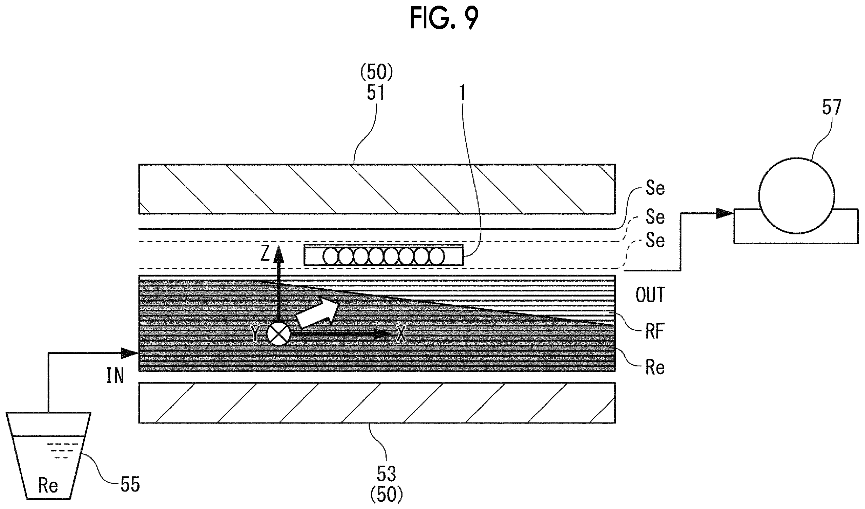

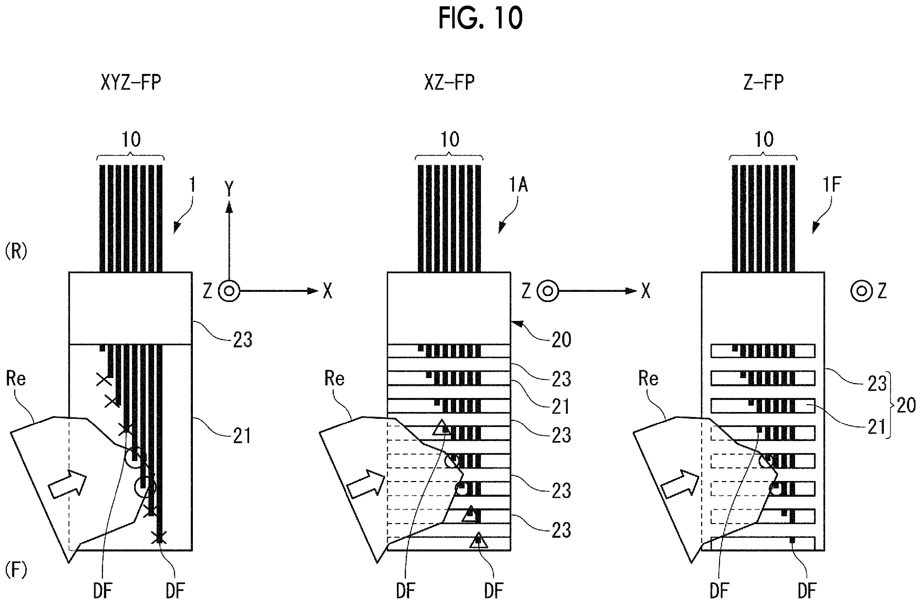

### [Impregnating Resin Detection Method: Refer to FIGS. 9 and 10]

Next, a method of detecting resin impregnation while restricting the flow path of the resin will be described. This method serves as a countermeasure against false detection of resin impregnation caused by race tracking that may occur in the RTM process.

Here, "race tracking" refers to a phenomenon that occurs as a result of small gaps that inevitably arise in the RTM process. In the present embodiment, the gap occurs around the periphery of the detection sensor 1, and the resin Re in a liquid state preferentially flows through this gap, whereby race tracking may occur.

### [Outline of RTM Process]

First, an outline of the detection method in the RTM process will be described with reference to FIG. 9.

Reinforcing fibers RF are accommodated between a pair of molds, an upper mold 51 and a lower mold 53. The detection sensor 1 is, for example, sandwiched between the reinforcing fibers RF and the upper mold 51. In FIG. 9, both end portions of the upper mold 51 and the lower mold 53 in an X direction are open; however, in the actual RTM process, the upper mold 51 and the lower mold 53 also cover both end portions. Including these portions, the upper mold 51 and the lower mold 53 are collectively referred to as a mold 50.

A resin tank 55 that stores the resin Re in a liquid state for impregnating the reinforcing fibers inside the mold 50, and a pump 57 that depressurizes and evacuates the inside of the mold 50 are provided so as to be attached to the mold 50. When impregnating the reinforcing fibers RF with the resin Re, the pump 57 is driven to depressurize the inside of the mold 50, thereby drawing the resin Re from the resin tank 55 into the inside of the mold 50. The drawn resin Re flows into the inside of the mold 50 from the lower left toward the upper right in the drawing. In the mold 50, as shown in FIG. 9 and the like, the X direction, the Y direction, and the Z direction are defined. In addition, in FIG. 9, portions of the reinforcing fibers RF shown in gray indicate impregnation with the resin Re.

### [Detection Sensor to Be Compared]

Meanwhile, three types of detection sensors shown in FIG. 10 are prepared.

The three types are the detection sensor 1, the detection sensor 1A, and the detection sensor 1F from the left side in the drawing.

In the detection sensor 1, the periphery of the detection surface DF on a tip end side of the optical fiber 10 is open, with no second holder element 23 provided, so that flow paths for the arriving resin Re are formed in all directions, that is, the X direction, the Y direction, and the Z direction. Accordingly, the detection sensor 1 is denoted as XYZ-FP. Even with the detection sensor 1 that does not include the second holder element 23, the basic effect of the present disclosure can be achieved, that is, a plurality of detection surfaces DF can be provided by a single installation operation.

Since the plurality of second holder elements 23 are provided intermittently in the longitudinal direction L in the detection sensor 1A, a flow path for the resin Re in the Y direction is not formed, and flow paths are provided only in the X direction and the Z direction. Accordingly, the detection sensor 1A is denoted as XZ-FP.

The detection sensor 1F includes the plurality of second holder elements 23 provided intermittently in the longitudinal direction L, and, in addition, the second holder elements 23 are provided on both sides in the width direction W. Therefore, the detection surface DF of each of the optical fibers 10 is disposed in a rectangular region surrounded by the rectangular second holder elements 23. Upon reaching this rectangular region, the flow paths of the resin Re flowing toward other rectangular regions in the X direction and the Y direction are restricted, whereby the resin Re flows along the flow path of the region in the Z direction. Accordingly, the detection sensor 1F is denoted as Z-FP.

### [Flow of Resin Re]

### <Detection Sensor 1>

As shown in FIG. 10, it is assumed that impregnation of the detection sensor 1 with the resin Re in a liquid state has begun. Even when the resin Re has directly reached only the two optical fibers 10C and 10D, the resin Re that has reached the optical fibers 10C and 10D may travel in the Y direction along the periphery of the optical fibers 10C and 10D and reach other optical fibers 10A, 10B, 10E, and 10F, and the like. Therefore, the resin Re may be falsely detected at the locations marked with "X" in FIG. 10. The locations marked with circles in FIG. 10 indicate that the resin Re is properly detected.

### <Detection Sensor 1A>

It is assumed that, in the detection sensor 1A, the impregnation with the resin Re has reached the same locations as in the detection sensor 1. In the detection sensor 1A, since the second holder elements 23 are provided intermittently in the longitudinal direction L, the flow path of the resin Re from a strip-shaped region partitioned by the second holder element 23 and the second holder element 23 adjacent to each other to an adjacent strip-shaped region is restricted. Therefore, with the detection sensor 1A, it is possible to selectively detect the resin Re with respect to the flow paths of the resin Re in the X direction and the Z direction. In FIG. 10, the locations marked with triangles indicate that the resin Re may be falsely detected.

### <Detection Sensor 1F>

It is assumed that, in the detection sensor 1F, the impregnation with the resin Re has reached the same locations as in the detection sensor 1. In the detection sensor 1F, the detection surface DF of each of the optical fibers 10 is disposed in a rectangular region surrounded by the rectangular second holder elements 23. Therefore, with the detection sensor 1F, it is possible to selectively detect the resin Re with respect to the flow path of the resin Re in the Z direction.

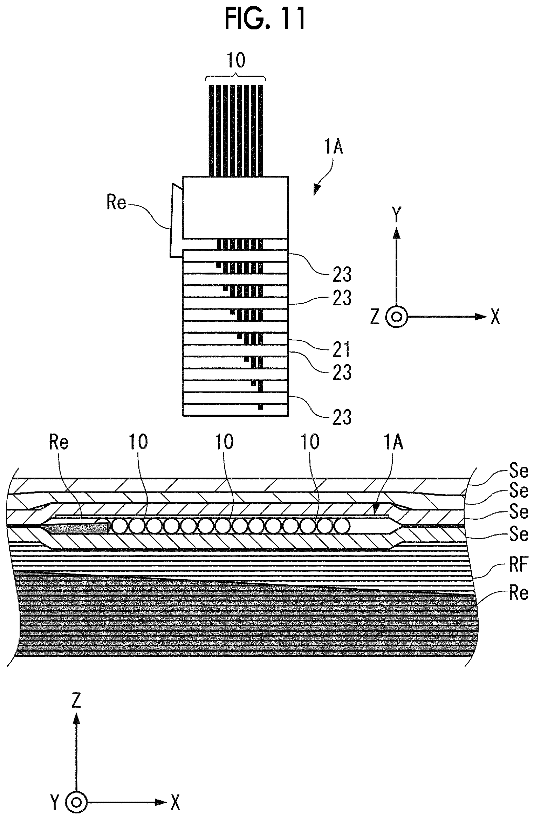

With reference to FIG. 11, the detection sensor 1A will be further examined.

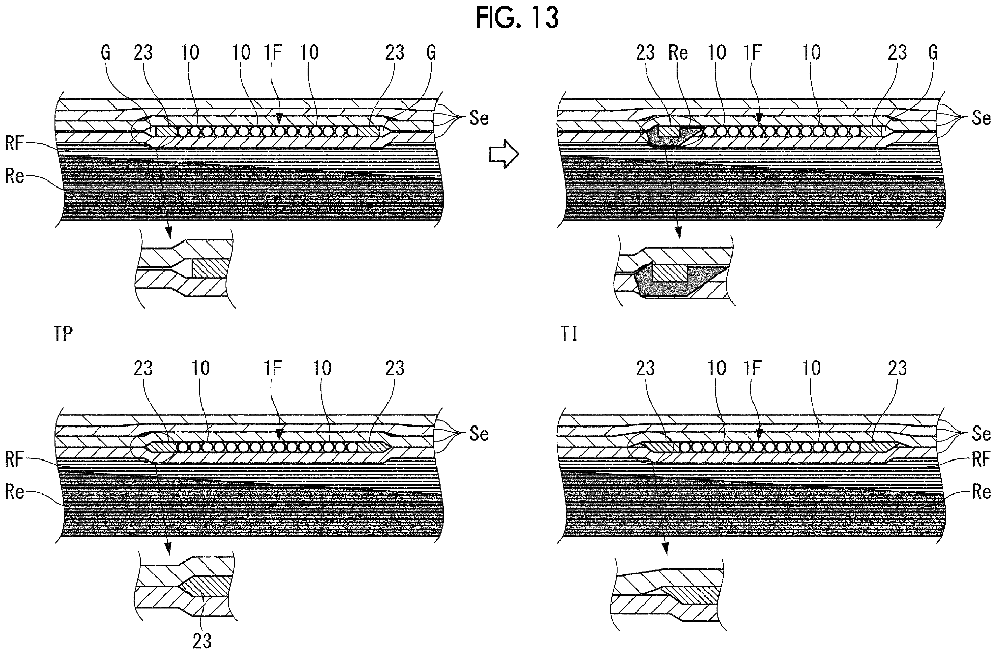

In a case where the detection sensor 1A is not disposed, at a timing when the resin has not yet arrived at the position of the detection sensor 1A, a minute gap G (refer to FIG. 13) present at the end portion of the detection sensor 1A in the width direction W may allow the resin Re to pass through the gap and reach that position, as shown in FIG. 11. In this case, with the detection sensor 1A, since no element impedes the flow of the resin Re in the X direction, the resin Re may readily reach the detection surface DF.

As shown in FIG. 11, the thin strip-shaped detection sensor 1A or the like may be used for detection with its front and back surfaces covered with one or more sheets Se made of a resin or other materials.

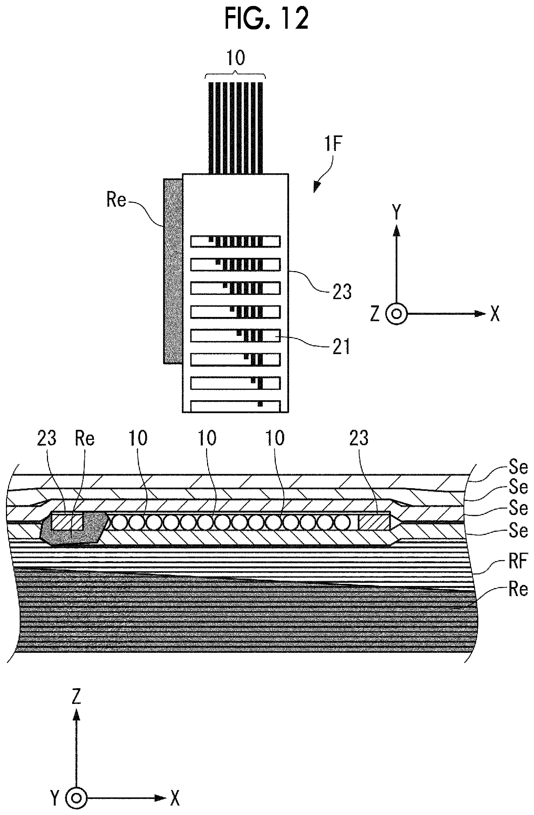

In contrast, as shown in FIG. 12, in the case of the detection sensor 1F, even when the resin Re passes through the gap at the end portion in the width direction W and reaches that position, the resin cannot reach the optical fiber 10 unless the resin first flows in the Z direction, because the second holder elements 23 are present. That is, the second holder elements 23 provided at the end portions in the width direction W can delay the arrival of the resin. In a case where, during that delay period of the resin Re, the resin Re arrives via the original route, correct detection can be achieved without false detection occurring.

### <End Face Structure of Detection Sensor: Refer to FIG. 13>

As shown in the upper part of FIG. 13, the resin Re may flow into the gap G between the detection sensor 1F and the sheets Se and Se that cover the detection sensor 1F from the front and back surfaces at the end portions of the detection sensor in the width direction W. Therefore, it is preferable to employ a second holder element 23 shaped to fill the gap G.

The gap G has a tapered shape, as shown in FIG. 13. Accordingly, following the shape of the gap G, the second holder element 23 is tapered toward both end portions in the width direction W. As the tapered shape, the second holder element 23 can be configured as a tapered shape (on the lower left side in FIG. 13) or as a shape having a monotonic inclination in the thickness direction T (on the lower right side in FIG. 13).

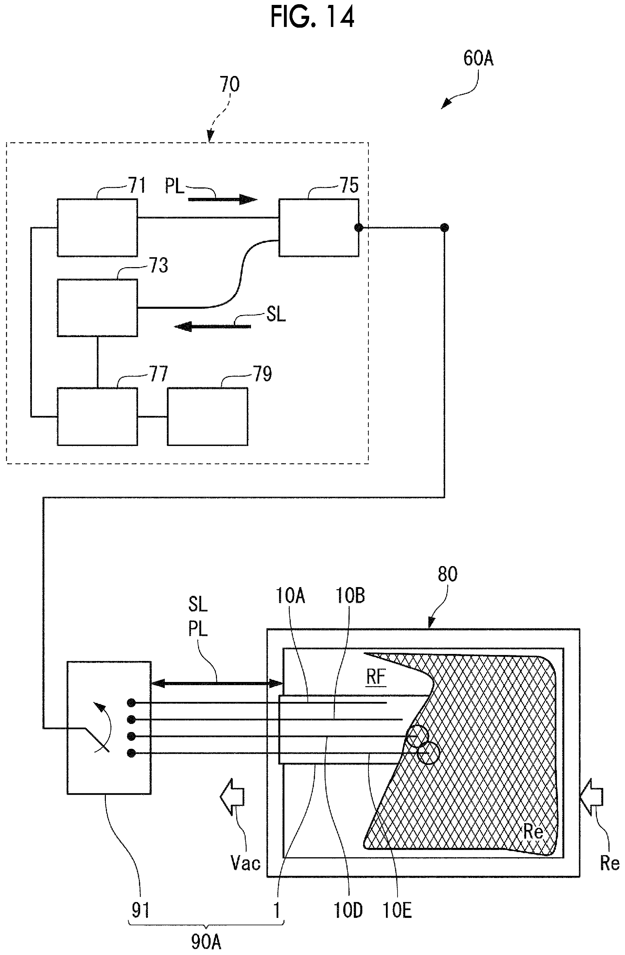

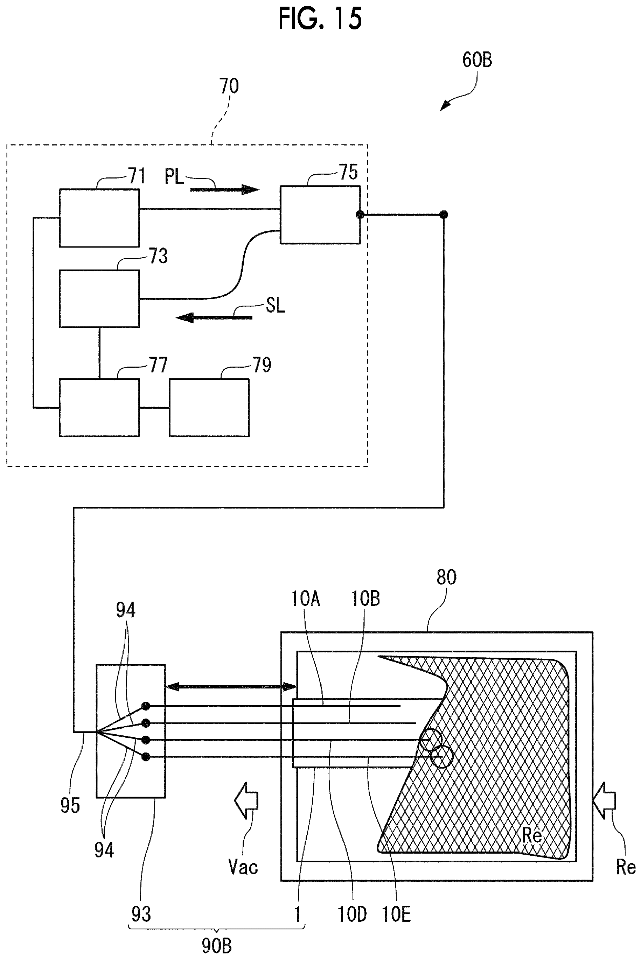

### [Impregnation Monitoring System: FIGS. 14 and 15]

Next, a system for monitoring resin impregnation using the detection sensor 1 according to the present embodiment will be described. Here, two examples, a monitoring system 60A and a monitoring system 60B, will be described. The monitoring system 60A uses an optical switch capable of transmitting and receiving the probe light PL and the signal light SL to and from the plurality of optical fibers 10, and of switching optical paths. Hereinafter, the monitoring system 60A and the monitoring system 60B will be described in this order.

### [Monitoring System 60A]

The monitoring system 60A includes a control unit 70 that controls a monitoring operation of resin impregnation, a resin impregnation portion 80 in which the RTM process is executed, and a detection unit 90A that detects resin impregnation in the resin impregnation portion 80 and that sends a detection result to the control unit 70.

The control unit 70 includes a light source 71 that emits the probe light PL; a photodetector 73 that receives the signal light SL; and an optical branching circuit 75 that sends the probe light PL from the light source 71 toward the detection unit 90A and that, upon receiving the signal light SL from the detection unit 90A, sends the signal light SL toward the photodetector 73.

The control unit 70 includes a signal-processing/controller 77 that is connected to both the light source 71 and the photodetector 73, and that causes emission of the probe light PL from the light source 71 and receives the signal light SL received by the photodetector 73 to determine impregnation of the resin Re. The control unit 70 further includes a computation/display unit 79 that acquires the probe light PL and the signal light SL from the signal-processing/controller 77 and computes the reflectance difference ΔR and the like before and after resin arrival, and that displays the reflectance difference ΔR and the determination result of resin impregnation.

The resin impregnation portion 80 includes the mold 50, the resin tank 55, and the pump 57 mentioned above, and, in a state in which the reinforcing fibers RF to be impregnated with the resin Re are supported inside the mold 50, the pump 57 is driven to impregnate the reinforcing fibers RF inside the mold 50 with the resin Re.

The detection unit 90A includes the detection sensor 1 disposed inside the mold 50, and an optical switch 91 that sends the probe light PL to the detection sensor 1 and that receives the signal light SL from the detection sensor 1. The optical switch 91 continuously switches the connection between the optical branching circuit 75 and any one of the plurality of optical fibers 10 of the detection sensor 1. For example, the connection between the optical branching circuit 75 and the optical fiber 10A, the connection between the optical branching circuit 75 and the optical fiber 10B, the connection between the optical branching circuit 75 and the optical fiber 10C, and the connection between the optical branching circuit 75 and the optical fiber 10D are switched in sequence. As a result, the signal-processing/controller 77 can continuously acquire the detection result of the resin Re for each of the optical fibers 10A, 10B, 10C, and 10D.

Assuming that the impregnation with the resin Re has reached the position shown in FIG. 14, the optical fibers 10C and 10D detect the resin Re, whereas the optical fibers 10A and 10B have not yet been reached by the resin Re and cannot detect the resin Re. Correspondingly, the optical power of the signal light SL from the optical fibers 10A and 10B remains unchanged from before, whereas the optical power of the signal light SL from the optical fibers 10C and 10D decreases. In this way, with the monitoring system 60A, it is possible to detect the degree of impregnation with the resin Re.

### [Monitoring System 60B: FIG. 15]

The monitoring system 60B has the same configuration as the monitoring system 60A except that the detection unit 90A of the monitoring system 60A is replaced with a detection unit 90B.

The detection unit 90B includes an optical splitter/combiner 93 for processing the probe light PL and the signal light SL using multiplexing, in which a plurality of signals are collectively transmitted on a single transmission path, and the detection sensor 1. The detection sensor 1 is the same as that of the detection unit 90A. The optical splitter/combiner 93 includes a plurality of branch lines 94 respectively connected to the N optical fibers 10, and the plurality of branch lines 94 merge into a single common line 95 and are connected to the optical branching circuit 75 of the control unit 70.

As multiplexing for a transmission path that is an optical fiber, a wavelength division multiplex (WDM) scheme is mainly used; therefore, it is preferable to use an optical splitter/combiner 93 that executes WDM. WDM refers to a scheme in which light at a large number of wavelengths is transmitted inside a single optical transmission path (optical fiber).

In addition to WDM, other multiplexing techniques such as frequency division multiplexing (FDM) and time division multiplexing (TDM) may also be employed.

### [Effects Achieved by Monitoring Systems 60A and 60B]

By using the detection sensor 1 according to the present embodiment, the optical fibers 10 serving as respective sensor elements can be automatically switched (60A), or detection can be simultaneously performed with respect to the plurality of optical fibers 10 (60B), so that it is possible to ascertain the behavior of temporal changes in the resin impregnation distribution during the RTM process. As a result, the impregnation conditions of the molded member in the RTM process can be optimally adjusted during the in-process stage. Accordingly, with the monitoring systems 60A and 60B, in addition to ensuring the quality of the molded member by reducing the risk of non-impregnated portions, it is possible to achieve improved efficiency by shortening the impregnation process time.

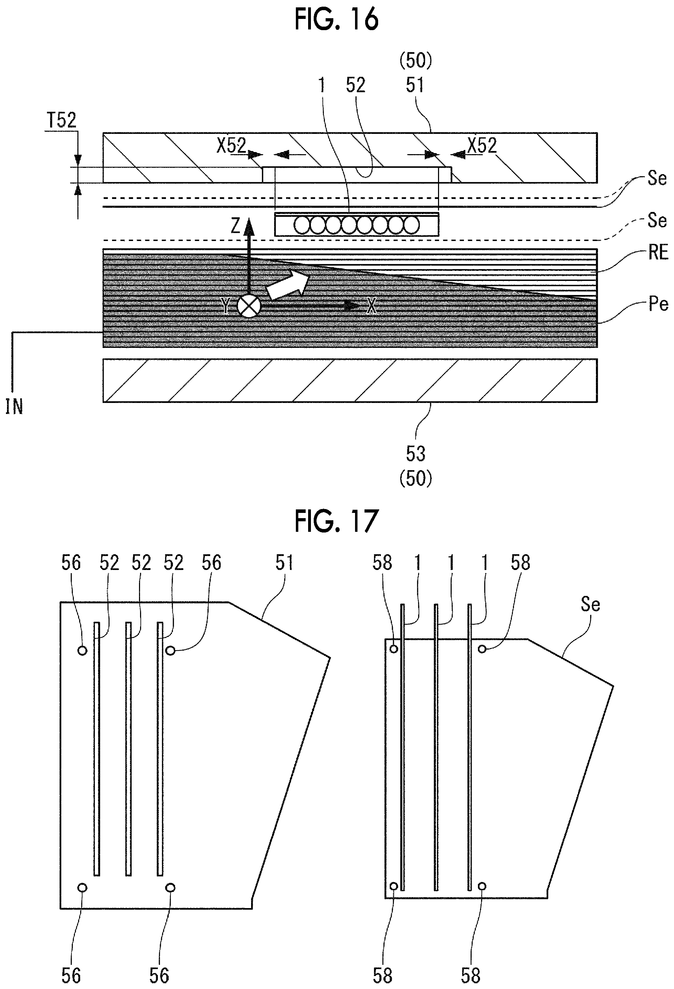

### [Structure of Mold: Refer to FIGS. 16 and 17]

Next, a structure of a preferred mold 50 used in the RTM process will be described with reference to FIGS. 16 and 17.

A sensor accommodating chamber 52 in which the detection sensor 1 is disposed is provided in the upper mold 51 of the mold 50. The sensor accommodating chamber 52 is formed as an upward recess from an opposing surface of the upper mold 51 that faces the lower mold 53. A dimension T52 of the recess in the sensor accommodating chamber 52 is formed to be approximately equal to a thickness T1 of the detection sensor 1, or slightly smaller than the thickness T1. Additionally, the sensor accommodating chamber 52 preferably has a dimension X52 from a side surface of the detection sensor 1 of 10 mm or less.

One or more resin sheets Se are interposed between the detection sensor 1 and the upper mold 51. As shown in FIG. 17, the detection sensor 1 is fixed in advance to the sheet Se, and the detection sensor 1 is accommodated in the sensor accommodating chamber 52 together with a part of the sheet Se. The detection sensor 1 is fixed to the sheet Se by methods such as adhesion, fusion bonding, or adhesive tape. In order to specify the position at which the detection sensor 1 is to be fixed, a template is prepared in advance, and the detection sensor 1 is fixed at a predetermined position on the sheet Se in accordance with the template. FIG. 17 shows an example in which three (M = 3) detection sensors 1 are fixed to the sheet Se.

It is preferable to display marks 56 and 58 at corresponding positions on the upper mold 51 and the sheet Se in order to dispose the sheet Se, to which the detection sensor 1 is fixed, at a predetermined position on the upper mold 51. The sheet Se is aligned with the upper mold 51 using the marks 56 and 58 as references.

By providing the sensor accommodating chamber 52, the protrusion amount of the detection sensor 1 from the upper mold 51 toward the underlying reinforcing fibers RF can be reduced, whereby the extent to which the shape of the detection sensor 1 is imprinted onto the molded member can be reduced. By making the depth of the sensor accommodating chamber 52 shallower within a range in which depressions and wrinkles of the FRP occurring near the imprinted portion are allowable, the machining cost of the upper mold 51 can be reduced.

By aligning the sheet Se with the upper mold 51 using the mark 56 as a reference, the detection sensor 1 can be readily accommodated in the sensor accommodating chamber 52. By making the dimension of the sensor accommodating chamber 52 in the width direction W greater than the dimension of the detection sensor 1 in the width direction W, it is possible to facilitate work when accommodating the detection sensor 1 in the sensor accommodating chamber 52.

### [Supplementary Notes]

The present disclosure can be understood as follows.

### [Supplementary Note 1]

A liquid detection sensor (1) including:
an array of optical transmission members (10) that include a plurality of optical transmission members (10) each of which transmits light supplied from a light source; and
a thin strip-shaped holder (20) that supports the array of optical transmission members,
in which the holder (20) includes
   a first holder element (21) that supports one or more arrays of optical transmission members (10) on a support surface spanning a first direction (longitudinal direction L) and a second direction (width direction W) orthogonal to the first direction, and
the plurality of optical transmission members (10) are arranged in the second direction.

### [Supplementary Note 2]

In Supplementary Note 1, preferably, the plurality of optical transmission members (10) are arranged at intervals in the second direction.

### [Supplementary Note 3]

In Supplementary Note 1 or 2, preferably, each of the plurality of optical transmission members (10) includes a detection surface (DF) for a liquid, and
the detection surface (DF) of each of the plurality of optical transmission members (10) is offset in position in the first direction.

### [Supplementary Note 4]

In any one of Supplementary Notes 1 to 3, preferably,
the detection surface (DF) of each of the plurality of optical transmission members (10) is offset in position in the first direction in an order of arrangement in the second direction.

### [Supplementary Note 5]

In any one of Supplementary Notes 1 to 4, preferably,
each of the plurality of optical transmission members (10):
extends straight in the first direction; or
includes a portion curved from the first direction to the second direction.

### [Supplementary Note 6]

In any one of Supplementary Notes 1 to 4, preferably,
the holder (20) includes
a second holder element (23) that fixes the optical transmission member (10) to the first holder element (21).

### [Supplementary Note 7]

In Supplementary Note 6, preferably,
the second holder element (23) is provided
in one or more regions of the first holder element (21) in the first direction, over a part or all of the regions in the second direction.

### [Supplementary Note 8]

In Supplementary Note 6 or 7, preferably,
the second holder element (23) is provided
along the first direction at both ends of the first holder element (21) in the second direction.

### [Supplementary Note 9]

An impregnating resin monitoring system (60A, 60B) including:
a resin impregnation portion (80) in which reinforcing fibers (RF) disposed inside a mold are impregnated with a liquid resin;
a detection unit (90A, 90B) that detects an impregnating resin in the resin impregnation portion (80); and
a control unit (70) that controls a monitoring operation of the impregnating resin,
in which the detection unit (90A, 90B) includes the detection sensor according to any one of [Supplementary Note 1] to [Supplementary Note 8].

### [Supplementary Note 10]

An impregnating resin monitoring method of detecting that reinforcing fibers (RF) disposed inside a mold are impregnated with a liquid resin, the liquid monitoring method including:
installing the detection sensor according to any one of [Supplementary Note 1] to [Supplementary Note 8] inside the mold so as to be adjacent to the reinforcing fibers.

It is also possible, in addition to the above, to selectively adopt the configurations described in the above-described embodiment or change the configurations to other configurations as appropriate.

For example, although the optical fibers 10 are supported on the first holder element 21 by providing the second holder elements 23, the optical fibers 10 may instead be supported by the first holder element 21 by, for example, bonding the optical fibers 10 to the first holder element 21. That is, the embodiment of supporting the optical fibers 10 on the first holder element 21 is optional.

### Reference Signs List

1, 1A, 1B, 1C, 1D, 1E, 1F: detection sensor
2: material
11B, 12B, 13B: sensor unit
10, 10A, 10B, 10C, 10D, 10E, 10F, 10G, 10H: optical fiber
11: first portion
13: second portion
15: third portion
20: holder
21: first holder element
23: second holder element
41: core
43: cladding
45: resin introduction passage
47: reflection chamber
49: shielding plate
50: mold
51: upper mold
52: sensor accommodating chamber
53: lower mold 55: resin tank
56: mark
57: pump
60A, 60B: monitoring system
70: control unit
71: light source
73: photodetector
75: optical branching circuit
77: controller
79: display unit
80: resin impregnation portion
90A, 90B: detection unit
91: optical switch
93: optical splitter/combiner
94: branch line
95: common line
DF: detection surface
L: longitudinal direction
RF: reinforcing fibers
PL: probe light
RL: reflected light
Re: resin
SL: signal light
T: thickness direction
W: width direction

## Claims

1. A liquid detection sensor comprising:
an array of optical transmission members that include a plurality of optical transmission members each of which transmits light supplied from a light source; and
a thin strip-shaped holder that supports the array of optical transmission members,
wherein the holder includes
a first holder element that supports one or more arrays of optical transmission members on a support surface spanning a first direction and a second direction orthogonal to the first direction, and
the plurality of optical transmission members are arranged in the second direction.

2. The detection sensor according to Claim 1,
wherein the plurality of optical transmission members are arranged at intervals in the second direction.

3. The detection sensor according to Claim 1,
wherein each of the plurality of optical transmission members includes a detection surface for a liquid, and
the detection surface of each of the plurality of optical transmission members is offset in position in the first direction.

4. The detection sensor according to Claim 3,
wherein the detection surface of each of the plurality of optical transmission members is offset in position in the first direction in an order of arrangement in the second direction.

5. The detection sensor according to Claim 1,
wherein each of the plurality of optical transmission members:
extends straight in the first direction; or
includes a portion curved from the first direction to the second direction.

6. The detection sensor according to Claim 1,
wherein the holder includes
a second holder element that fixes the optical transmission member to the first holder element.

7. The detection sensor according to Claim 6,
wherein the second holder element is provided
in one or more regions of the first holder element in the first direction, over a part or all of the regions in the second direction.

8. The detection sensor according to Claim 6,
wherein the second holder element is provided
along the first direction at both ends of the first holder element in the second direction.

9. An impregnating resin monitoring system comprising:
a resin impregnation portion in which reinforcing fibers disposed inside a mold are impregnated with a liquid resin;
a detection unit that detects an impregnating resin in the resin impregnation portion; and
a control unit that controls a monitoring operation of the impregnating resin,
wherein the detection unit includes the detection sensor according to any one of Claims 1 to 8.

10. An impregnating resin monitoring method of detecting that reinforcing fibers disposed inside a mold are impregnated with a liquid resin, the liquid monitoring method comprising:
installing the detection sensor according to any one of Claims 1 to 8 inside the mold so as to be adjacent to the reinforcing fibers.
